# EUROPEAN PATENT APPLICATION

(11) **EP 0 977 369 A2**
(43) Date of publication of application: **02.02.2000**
(21) Application number: 99114593.9
(22) Date of filing: 26.07.1999
(51) Int. Cl.: H04B 1/707

(54) **Sampling means for use with rake receiver**

(30) Priority: 31.07.1998 GB 9816715
(71) Applicant: ROKE MANOR RESEARCH LIMITED, Romsey, Hampshire SO51 0ZN (GB)
(72) Inventor: Hulbert, Anthony Peter, Southampton. Hants, SO15 7QH (GB)
(74) Representative: Allen, Derek

(57) **Abstract**

For each channel of a rake receiver, the sampling means includes a buffer store 4 and a linear interpolator 6, which is switchably connected to the buffer store via switching means 8. The switching means 8 connects two consecutive bits of the buffer store to the linear interpolator 6, and when operated, connects two further consecutive bits of the buffer store 4 to the interpolator 6. This switching process is repeated until a full sweep over one chip is accomplished. The buffer store 4 holds two samples per chip.

## Description

The present invention relates to sampling means for use with rake receivers.

Patent Number GB 2278 983B entitled Apparatus for use in equipment providing a digital radio link between a fixed and a mobile radio unit discloses a method for receiving a spread spectrum signal which has been transmitted and passed over a multipath radio propagation path leading to multiple replicas of the signal with different amplitudes and different phase relationships and resolvable where the time difference between the paths was greater than or equal to a period of one chip, where a chip is a signalling symbol of the spread spectrum waveform. This type of receiver is henceforth referred to as a comprehensive rake receiver.

The comprehensive rake receiver as disclosed, in effect forms a matched filter to the combination of the channel with the signal waveform. However, the comprehensive rake receiver was designed around the concept of sampling only once per chip. The bandwidth of the signal is slightly greater than the chip rate for a typical waveform shaping factor, such as square root of the raised power cosine and therefore the minimum sampling rate required to meet the sample theorem requirements is not fully met. Where the sampling takes place in such a way that samples align exactly with the peak of the signal response, there is no loss due to the mis-sampling in time. However, where this is not the case there will be some small loss if the signal being received is one of an ensemble of nominally orthogonal signals. This loss in performance can be significant, perhaps of the order of a decibel if the sampling is one half of a chip away from the optimal sampling position.

It is an aim of this invention to avoid this worse case condition arising consistently in a comprehensive rake receiver.

Conventionally spread spectrum signals are often transmitted with forward error correction coding for example, convolution coding, in frames of length, for example, 10 or 20 milliseconds. The performance of the system is defined in terms of the frame error rate for a given energy per bit to noise spectral density ratio and when interleaving is employed, this performance would be dependent upon the average of the sensitivity of the receiver over the period of a frame.

According to the present invention there is provided sampling means for use with a rake receiver, including a first buffer store and a linear interpolator for an I channel of a receiver, and a second buffer store and a linear interpolator for a Q channel of a receiver, each interpolator being arranged to be switchably connected via switching means to two consecutive bits of a respective buffer store holding two samples per chip, and causing said switching means to connect the interpolators to two further consecutive bits in repetitive fashion until a full sweep over one chip is accomplished.

The buffer store may conveniently contain three bits.

The connection of the switches means that the interpolators may be carried out for even numbered frames and then for odd numbered frames.

An embodiment of the present invention will now be described with reference to the accompanying drawings, wherein,
Figure 1 shows the excess delay over a frame period for one chip, and
Figure 2 shows a block diagram of the invention together with a waveform diagram.

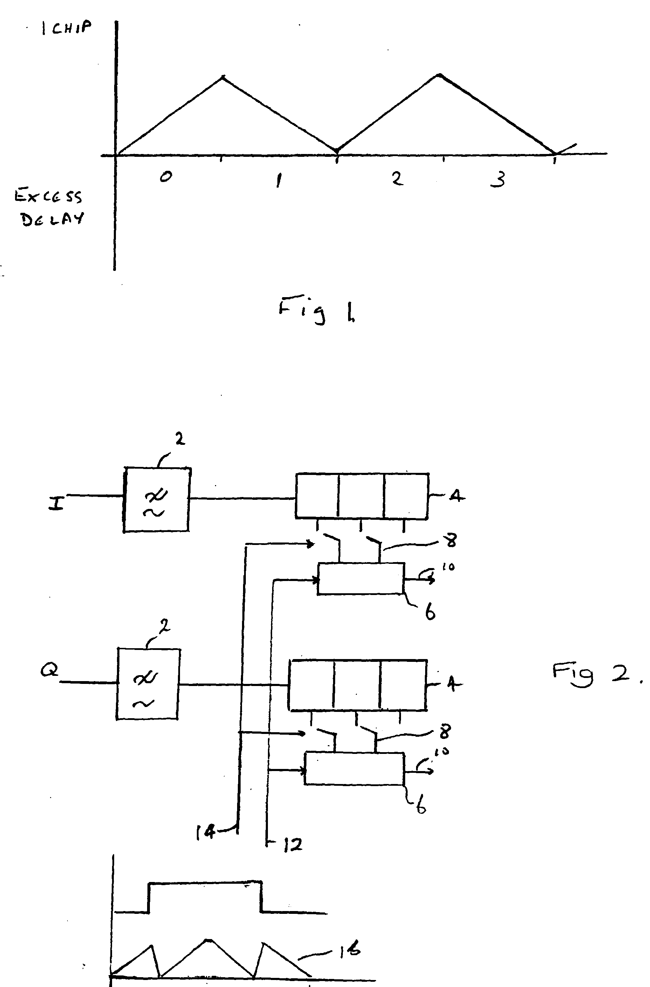

Referring to Figure 1, the excess delay is shown for one chip over a number of frames 0-3.

Referring to Figure 2, the present invention provides average performance over a frame by gradually shifting the timing of the sampling by a period of one chip over a period of one frame.

The circuit which carries out this function comprises the filters 2 respectively receiving the I and Q channel signals. The outputs from the filters are connected to a respective buffer store 4, the output bits, of which are switchably connected via a respective switching means 8 to the interpolators 6. Each interpolator provides an output signal on line 10. The interpolators 6 are controlled by signals over line 12, and the switching means are controlled by signals over line 14.

Thus, over one frame, the sampling time is shifted by one chip smoothly, for example increasing in delay over the period of the frame. In the subsequent frame, the delay will be reduced smoothly by one chip over the period, thus the timing will vary in the form of a triangular waveform 16, as shown in the waveform diagram Figure 2.

The overall effect of this will be that the performance will always be an average between worst case and best case sampling positions. A timing variation is obtained by arranging the receiver to sample initially two samples per chip using linear interpolators 6, to vary from one sample to the next in linear fashion and then switching between adjacent bits of a buffer store 4 by means of a switching means 8, to the next sample and then repeating that linear sweep in order to obtain a full sweep over one chip. The process would be carried out for even numbered frames, and then for odd numbered frames, the inverse process would be applied.

## Claims

1. Sampling means for use with rake receivers including a first buffer store and a linear interpolator for an I channel of a receiver, and a second buffer store and a linear interpolator for a Q channel of a receiver, each interpolator being arranged to be switchably connected via switching means to two consecutive bits of the respective buffer store holding two samples per chip, and causing the said switching means to be connected to the interpolators to two further consecutive bits in repetitive fashion until a full sweep over one chip is accomplished.

2. Sampling means as claimed in Claim 1, wherein each buffer store contains three bits.

3. Sampling means as claimed in Claim 1 or Claim 2, wherein the connection of the switching means to the interpolators is carried out for even numbered frames and then for odd numbered frames.

4. Sampling means substantially as herein before described with reference to Figure 2 of the accompanying drawings.
